# EUROPÄISCHE PATENTANMELDUNG

(11) **EP 3 979 359 A1**
(43) Veröffentlichungstag der Anmeldung: **06.04.2022**
(21) Anmeldenummer: 21200076.4
(22) Anmeldetag: 30.09.2021
(51) Int. Cl.: H01M 4/04, H01M 10/0525

(54) **VERFAHREN ZUR FORMIERUNG EINER BATTERIEZELLE**

(30) Priorität: 05.10.2020 DE 102020125990
(71) Anmelder: VOLKSWAGEN AG, 38440 Wolfsburg (DE)
(72) Erfinder: Meister, Paul, 38239 Salzgitter (DE); Bolli, Christoph, 38100 Braunschweig (DE); Qi, Xin, 48151 Münster (DE); Dagger, Tim, 49811 Lingen (DE)
(74) Vertreter: karo IP

(57) **Zusammenfassung**

Verfahren zur Formierung einer Batteriezelle (1), wobei die Batteriezelle (1) ein Gehäuse (2) und darin angeordnet zumindest eine Anode (3), eine Kathode (4), dazwischen angeordnet einen Separator (5) sowie einen, die Anode (3), die Kathode (4) und den Separator (5) zumindest teilweise umgebenden Elektrolyten (6) aufweist; wobei das Verfahren zumindest die folgenden Schritte aufweist:
a) Bereitstellen des Gehäuses (2) und darin angeordnet die Anode (3), die Kathode (4) sowie den Separator (5);
b) Kontaktieren der Anode (3), der Kathode (4) und des Separators (5) mit einer ersten Zusammensetzung (7) des Elektrolyten (6);
c) elektrisches Aufladen der in dem ersten Zustand (8) vorliegenden Batteriezelle (1) auf einen ersten Spannungswert (9) zwischen der Anode (3) und der Kathode (4);
d) Ergänzen der ersten Zusammensetzung (7) des Elektrolyten (6) mit einer, gegenüber der ersten Zusammensetzung (7) unterschiedlichen zweiten Zusammensetzung (11) des Elektrolyten (6) in dem Gehäuse (2).

## Beschreibung

Die Erfindung betrifft ein Verfahren zur Formierung einer Batteriezelle.

Für den Antrieb von Kraftfahrzeugen werden vermehrt Batterien, insbesondere Lithium-Ionen-Batterien eingesetzt. Batterien werden üblicherweise aus Zellen zusammengesetzt, wobei jede Zelle ein Gehäuse und darin angeordnet mindestens eine Anode, eine Kathode und dazwischen angeordnet einen Separator aufweist.

Die Formierung sowie die anschließende Reifung gehören zu den wichtigsten Prozessschritten in der Produktion von Batteriezellen, insbesondere von Lithium-Ionen-Zellen. Während der Formierung werden die frisch hergestellten Batteriezellen zum ersten Mal ge- und entladen. Dabei bilden sich wichtige Grenzschichten zwischen dem Elektrolyten und den Aktivmaterialien. Ihre Beschaffenheiten nehmen wesentlichen Einfluss auf die Leistungsfähigkeit und das Alterungsverhalten der Zellen. Die Grenzschicht auf der Anodenseite wird als Solid-Electrolyte-Interphase, kurz SEI, die auf der Kathodenseite als Cathodic Decomposition Layer, kurz CDL, oder Cathode-Electrolyte-Interphase, kurz CEI, bezeichnet.

Im Anschluss an die Formierung werden die Zellen einige Zeit gereift, um die Zelleigenschaften zu verbessern. In dieser Zeit werden verbliebene Nebenprodukte umgesetzt und der Elektrolyt kann sich in der gesamten Zelle verteilen, sofern er dies noch nicht geschafft hat.

Während der Formierung wird die Batteriezelle in einem ersten Zyklus von anfangs ca. 0 Volt auf höhere Spannungen geladen. Bereits im niedrigen Spannungsbereich von z. B. weniger als 3,7 Volt zersetzen sich einige Elektrolytkomponenten wie bspw. Elektrolytadditive an den Elektroden bspw. der Anode. Für manche Elektrolytkomponenten, wie bspw. zyklische Carbonate oder Additive, ist dieser Vorgang erwünscht (Additive einer ersten Art, wie z.B. SEI-Additive, die also für die Ausbildung der SEI eingesetzt werden), für andere Elektrolytkomponenten, wie bspw. andere Additive, ist dieser Vorgang unerwünscht (Additive der zweiten Art). Die ungewollte Zersetzung von Elektrolytkomponenten kann zum Anstieg des internen Widerstands der Batteriezelle führen. Des Weiteren können in unerwünschter Weise Additive der zweiten Art zersetzt werden, was dazu führt, dass diese aufgrund der reduzierten Menge nicht mehr vollumfänglich wirken können.

Für manche Elektrolytkomponenten, wie bestimmte Lösungsmittel und bspw. Sicherheitsadditive, kann die Zersetzung im Spannungsbereich der Sekundärzelle so umfänglich sein, dass eine Anwendung dieser Elektrolytkomponenten für den Einsatz in diesen Batteriezellen bis heute nicht möglich war. Zudem wurden bis heute Elektrolytkomponenten für den Einsatz in Sekundärzellen ausgeschlossen, deren Zersetzung die Leistungsfähigkeit der Batteriezelle zu stark negativ beeinflusst haben oder deren angedachte positive Wirkung aufgrund der umfänglichen Zersetzung nicht mehr zu messen ist.

Um der reduzierten Menge bspw. an Additiven der zweiten Art entgegenzuwirken, kann bereits anfangs ein Überschuss an diesen Additiven hinzugefügt werden. Dies führt jedoch zu Kostensteigerungen.

Alternativ können andere Additive mit höherer reduktiver Stabilität eingesetzt werden. Dies führt zur Einschränkung in der Auswahl der Additive der zweiten Art und kann des Weiteren zu einer Kostenzunahme oder zu Leistungseinbußen der Batteriezelle führen.

Schließlich können noch weitere Additive (erster Art oder zweiter Art) in die Elektrolytzusammensetzung eingebracht werden, die sich bei niedrigeren Spannungen zersetzen, um die Elektrode zu passivieren, und die Zersetzung der Additive der zweiten Art zu verhindern bzw. zu vermindern. Dies führt zur Verkomplizierung der Elektrolytformulierung und kann des Weiteren zu einer Kostenzunahme oder zu Leistungseinbußen der Batteriezelle führen.

Auf Elektrolytkomponenten wie Lösungsmittel und bspw. Sicherheitsadditive, die sich innerhalb des Spannungsbereichs der Sekundärzelle umfänglich zersetzen, wurde in der Vergangenheit möglichst verzichtet. Der Entwicklungsspielraum ist dadurch aber stark eingeschränkt, da potentiell interessante Elektrolytkomponenten durch ihre Instabilität bereits im frühen Entwicklungsstadium nicht für den Einsatz in Zellen berücksichtigt werden.

Aus der DE 10 2014 219 421 A1 ist ein Verfahren zur Formierung einer Lithiumbatterie bekannt.

Aus der DE 10 2016 013 809 A1 ist eine Additiv-Zusammensetzung für eine wiederaufladbare Batteriezelle bekannt.

Aus der DE 10 2018 201 283 A1 ist ein Verfahren zur Herstellung einer Lithium-Ionen-Batteriezelle bekannt.

Aufgabe der vorliegenden Erfindung ist es, die mit Bezug auf den Stand der Technik angeführten Probleme zumindest teilweise zu lösen. Insbesondere soll ein Verfahren zur Formierung einer Batteriezelle vorgeschlagen werden, durch das der bisher als notwendig erachtete, bereitzustellende Überschuss an Additiven vermieden werden kann. Weiter soll eine Zersetzung der Additive der zweiten Art verhindert werden. Zudem sollen Freiheitsgrade bei der Auswahl und Entwicklung von Elektrolyten nicht eingeschränkt werden.

Zur Lösung dieser Aufgaben trägt eine Verfahren mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird ein Verfahren zur Formierung einer Batteriezelle vorgeschlagen. Die Batteriezelle weist ein Gehäuse und darin angeordnet zumindest eine Anode, eine Kathode, dazwischen angeordnet einen Separator sowie einen, die Anode, die Kathode und den Separator zumindest teilweise umgebenden, insbesondere flüssigen, Elektrolyten auf. Das Verfahren weist zumindest die folgenden Schritte auf:
a) Bereitstellen des Gehäuses und darin angeordnet die Anode, die Kathode sowie den Separator;
b) Kontaktieren der Anode, der Kathode und des Separators mit einer ersten Zusammensetzung des Elektrolyten, so dass ein erster Zustand der Batteriezelle hergestellt ist;
c) elektrisches Aufladen der in dem ersten Zustand vorliegenden Batteriezelle auf einen ersten Spannungswert zwischen der Anode und der Kathode, so dass ein zweiter Zustand der Batteriezelle hergestellt ist;
d) Ergänzen der ersten Zusammensetzung des Elektrolyten mit einer, gegenüber der ersten Zusammensetzung unterschiedlichen zweiten Zusammensetzung des Elektrolyten in dem Gehäuse, so dass ein dritter Zustand der Batteriezelle hergestellt ist.

Das Gehäuse der Batteriezelle ist z. B. ein Hardcase oder eine Kompositfolie für eine Pouchzelle. Die Anode, Kathode als Elektroden und der Separator sind bekannte Komponenten einer Batteriezelle und z. B. als mit Aktivmaterial beschichtete elektrisch leitende Folien ausgeführt. Diese können in vorgegebener Reihenfolge gestapelt in der Batteriezelle angeordnet sein. Das Gehäuse wird mit einem, insbesondere flüssigen, Elektrolyt gefüllt.

Die Batteriezelle ist insbesondere eine lithiumhaltige Batteriezelle, insbesondere eine Sekundärzelle.

Insbesondere ist die Batteriezelle eine bekannte Batteriezelle mit bekannten Komponenten in bekannter Anordnung zueinander. Vorliegend wird ein besonders vorteilhaftes Verfahren zur Formierung dieser aus bekannten Komponenten aufgebauten Batteriezelle vorgeschlagen.

Insbesondere wird ein sequenzielles Befüllen des Gehäuses und sequenzielle Formierung der Batteriezelle vorgeschlagen. Dabei wird die Zusammensetzung des Elektrolyten für jeden Befüllungsschritt gezielt geeignet ausgewählt, so dass eine Ausbildung von Elektrolyt/ Elektroden-Grenzphasen bzw. Grenzschichten bewusst erfolgen kann.

Für den ersten Befüllschritt, also Schritt b) des Verfahrens, bzw. für nachfolgende Befüllschritte, z. B. Schritt d) des Verfahrens, erfolgt die Auswahl der Zusammensetzung des Elektrolyten insbesondere im Hinblick auf eine zielgerichtete Zersetzung der Elektrolytkomponenten sowie der damit verbundenen Ausbildung von Elektrolyt/ Elektroden-Grenzphasen bzw. Grenzschichten unter Berücksichtigung der Potentiale der jeweiligen Elektroden und der damit einhergehenden, jeweils in der Batteriezelle vorliegenden Spannung.

Dies ermöglicht im folgenden Befüllschritt, z. B. gemäß Schritt d) des Verfahrens, bzw. in den folgenden Befüllschritten, z. B. Schritt f) des Verfahrens, die Verwendung von bisher nicht nutzbaren Elektrolytkomponenten, bspw. Additive, Lösungsmittel und Salze.

Insbesondere wird die Batteriezelle zunächst mit einer ersten Zusammensetzung des Elektrolyten befüllt, die insbesondere bekannte Additive einer ersten Art enthält, die zur Passivierung der Anode eingesetzt werden.

Nach einem Ladeschritt gemäß Schritt c) wird die Batteriezelle in einem zweiten Befüllungsschritt mit einer zweiten Zusammensetzung weiter, also in Ergänzung zur ersten Zusammensetzung, befüllt. Die zweite Zusammensetzung umfasst bspw. Additive einer zweiten Art. Insbesondere erfolgt also eine Zugabe der zweiten Zusammensetzung erst nach (zumindest teilweiser) Passivierung der Anode, so dass nur noch eine geringe, bevorzugt keine, Reduktion der Additive der zweiten Art stattfindet. Die Zugabe der zweiten Zusammensetzung kann in einem Spannungsbereich der Batteriezelle stattfinden, in dem die Anode ein reduktives Potential aufweist, gegen das die Additive der zweiten Art nicht mehr zersetzt werden. Zudem werden die Additive der zweiten Art durch die bis zum Schritt d) und im Rahmen der Schritte b) und c) erfolgten Passivierung der Anode nicht mehr in nachfolgenden Ladeschritten zersetzt.

Insbesondere erfolgt nach Schritt d) im Rahmen eines Schrittes e) zumindest ein weiteres elektrisches Aufladen der Batteriezelle auf einen höheren Spannungswert oder eine Lagerung oder elektrisches Entladen. Die Lagerung kann insbesondere zusammen mit einer teilweisen oder vollständigen Entladung der Batteriezelle für ein Zeitintervall erfolgen, so dass ein vierter Zustand der Batteriezelle hergestellt ist. Aufladen und Lagerung und/ oder Entladung kann auch in Kombination miteinander erfolgen.

Insbesondere erfolgt nach Schritt e) im Rahmen eines Schrittes f) ein Ergänzen der ersten und zweiten Zusammensetzung des Elektrolyten mit einer, gegenüber der ersten und zweiten Zusammensetzung unterschiedlichen dritten Zusammensetzung des Elektrolyten, so dass ein fünfter Zustand der Batteriezelle hergestellt ist.

Insbesondere erfolgt nach jedem weiteren Befüllen ein weiteres elektrisches Aufladen und/ oder eine Lagerung der Batteriezelle für ein Zeitintervall.

Insbesondere können weitere Befüllungs-, Lade- und Temperaturlagerschritte folgen bis die Formierung abgeschlossen ist. Beispielsweise können Additive in einem dritten Befüllungsschritt, z. B. gemäß Schritt f), hinzugefügt werden, die weder an der Anode noch an der Kathode zersetzt werden können bzw. sollen. Beispiele hierfür können Überladeadditive, Flammschutzadditive oder andere Elektrolytkomponenten sein.

Die erste Zusammensetzung des Elektrolyten enthält insbesondere SEI-Additive, die also für die Ausbildung der SEI an der Anode eingesetzt werden. Diese Additive der ersten Art sind z. B. organische Carbonate, insbesondere die bekannten VC (Vinylencarbonat), FEC (Fluorethylencarbonat), VEC (Vinylethylencarbonat).

Die zweite Zusammensetzung des Elektrolyten enthält insbesondere CEI-Additive, die also für die Ausbildung der CEI an der Kathode verwendet werden. Diese Additive der zweiten Art sind z. B. Nitrile.

Die dritte Zusammensetzung des Elektrolyten enthält insbesondere Sicherheitsadditive, insbesondere die bekannte FPPN (Pentafluoro(phenoxy)cyclotriphosphazen), TFP (Tris(2,2,2-Trifluoroethyl)phosphat), TFMP (Bis(2,2,2-trifluoroethyl)methylphosphonat, FB (Fluorbenzol), CHB (Cyclohexyl Benzol), und/ oder z. B. temperaturinstabile Elektrolytkomponenten, insbesondere die bekannten DTD, TMSP, MMDS), und/ oder leicht zersetzbare Elektrolytkomponenten, wie z. B. das bekannte Acetonitril.

Insbesondere enthält die erste Zusammensetzung keine Addtive der zweiten Art und/ oder keine der im Zusammenhang mit der dritten Zusammensetzung erwähnten Additive. Insbesondere enthält die zweite Zusammensetzung Additive der zweiten Art sowie im Zusammenhang mit der dritten Zusammensetzung erwähnten Additive.

Insbesondere enthält die zweite Zusammensetzung keine Additive der ersten Art sowie keine der im Zusammenhang mit der dritten Zusammensetzung erwähnten Additive.

Insbesondere ist infolge des vorgeschlagenen Verfahrens eine Bereitstellung eines Überschusses an Additiven der zweiten Art nicht erforderlich, da die Anode bereits im ersten Ladeschritt, also im Rahmen des Schrittes c), nach der ersten Befüllung, also der Befüllung im Rahmen des Schrittes b), durch den Kontakt mit der ersten Zusammensetzung passiviert wurde. Dadurch werden die Additive der zweiten Art insbesondere nicht oder weniger reduktiv zersetzt.

Aufgrund der sequenziellen Befüllung und Aufladung ist damit insbesondere auch keine Anpassungen der gewünschten Elektrolyt-Zusammensetzung erforderlich, so dass Freiheitsgrade bei der Entwicklung von Elektrolyten nicht eingeschränkt, sondern im Gegenteil sogar neue Entwicklungsmöglichkeiten eröffnet werden.

Die Additive können im Rahmen der zweiten und/ oder dritten Zusammensetzung insbesondere in konzentrierter Form zugegeben werden, um die zur ersten Zusammensetzung zusätzlich hinzugegebene Flüssigkeitsmenge möglichst gering zu halten.

Für die Gewährleistung einer gleichmäßigen Verteilung jeder Zusammensetzung innerhalb der Batteriezelle bzw. des Gehäuses können verschiedene Strategien einzeln oder in Kombination angewandt werden. Insbesondere kann nach der Befüllung des Gehäuses mit der zweiten Zusammensetzung und/ oder der dritten Zusammensetzung ein Temperaturlagerschritt erfolgen. Insbesondere wird die Batteriezelle für ein Zeitintervall, z. B. mehrere Stunden, mehrere Tage oder sogar mehrere Wochen, gelagert, wobei insbesondere die Lagerung insbesondere innerhalb eines Temperaturintervalls oder entlang eines vorbestimmbaren Temperaturverlaufs erfolgt.

Insbesondere ist das Gehäuse zumindest während des Schrittes d) oder f) hin zu einer Umgebung offen, wobei vor einem gebrauchsfertigen Verschließen des Gehäuses ein Überschuss des Elektrolyten aus dem Gehäuse entfernt wird. Insbesondere wird ein Gas entfernt, dass bei der Ausbildung der SEI entsteht.

Insbesondere kann die zweite Befüllung gemäß Schritt d) und/ oder die dritte Befüllung gemäß Schritt f) der Batteriezelle mit einem Überschuss an Elektrolyt erfolgen, wobei durch den Überschuss eine Durchmischung der verschiedenen Zusammensetzungen gefördert wird. Der Überschuss kann beim Versiegeln der Batteriezelle, z. B. unter Vakuum, abgeführt bzw. abgesaugt werden.

Die Befüllung kann also konventionell an der geöffneten Batteriezelle durchgeführt werden.

Insbesondere können zumindest zwei, oder auch mehr als zwei, Zusammensetzungen des Elektrolyten zeitgleich in dem Gehäuse angeordnet werden, wobei dabei zumindest eine der Zusammensetzungen in einem Behälter und damit räumlich getrennt von der Anode, der Kathode, dem Separator und der mindestens einen anderen Zusammensetzung in dem Gehäuse angeordnet wird. Der Behälter wird nach einem Zeitintervall geöffnet zur Durchmischung der Zusammensetzungen in dem Gehäuse.

Insbesondere kann die Befüllung mit der zweiten Zusammensetzung und/ oder mit der dritten Zusammensetzung mittels einer Elektrolytbag, also einem geschlossenen Behälter, in dem die jeweilige Zusammensetzung angeordnet ist, erfolgen.

Während der Herstellung der Batteriezelle wird beispielsweise die erste Zusammensetzung konventionell über mindestens eine Lanze in das Gehäuse eingeführt. Zusätzlich wird vor Verschluss des Gehäuses der Batteriezelle mindestens ein Behälter in eine Gastasche der Batteriezelle miteingebaut. Der mindestens eine Behälter kann die zu einem späteren Zeitpunkt zur Herstellung der gewünschten Zusammensetzung der gebrauchsfertigen Batteriezelle benötigten weiteren Zusammensetzungen, insbesondere also die zweite und/ oder die dritte Zusammensetzung, enthalten.

Insbesondere wird das Gehäuse unmittelbar nach Anordnung der Zusammensetzungen bzw. der Behälter in dem Gehäuse verschlossen.

Insbesondere wird der mindestens eine Behälter berührungslos geöffnet.

Die Freisetzung der zweiten und/ oder dritten Zusammensetzung kann durch eine gerichtete Öffnung des betreffenden Behälters erfolgen. Die gerichtete Öffnung kann bspw. durch Einwirkung von Druck und/ oder Temperatur stattfinden. Die gerichtete Öffnung kann durch das geschlossene Gehäuse erfolgen, also berührungslos, also ohne Berührung des Behälters.

Insbesondere wird der Druck innerhalb der der Zelle nach Anordnung der Zusammensetzungen und vor dem Verschließen des Gehäuse vermindert.

Die Verwendung eines Behälters hat den Vorteil, dass das Gehäuse für die zweite Befüllung gemäß Schritt d) und/ oder die dritte Befüllung gemäß Schritt f) nicht erneut geöffnet werden muss. So kann die Prozesskette in ihrer ursprünglichen Form, (also Befüllung des Gehäuses in einem einzigen Schritt) weitestgehend beibehalten werden.

Insbesondere ist die erste Zusammensetzung frei von mindestens einem Additiv, dass zumindest in der zweiten Zusammensetzung enthalten ist. Insbesondere ist die zweite Zusammensetzung frei von mindestens einem Additiv, dass zumindest in der dritten Zusammensetzung enthalten ist.

Insbesondere beträgt der erste Spannungswert zumindest die untere Abschaltspannung, bevorzugt zumindest 50 % der Differenz der oberen und unteren Abschaltspannung plus die untere Abschaltspannung einer gebrauchsfertigen, formierten Batteriezelle. Insbesondere beträgt der Spannungswert einer gebrauchsfertigen, formierten Batteriezelle, also die Nennspannung, mehr als 3,0 Volt, besonders bevorzugt mehr als 3,2 Volt. Insbesondere beträgt der Spannungswert einer gebrauchsfertigen, formierten Batteriezelle höchstens 6 Volt, bevorzugt höchstens 5 Volt.

Insbesondere besteht der nicht-wässrige Elektrolyt aus mindestens einem nicht-wässrigen Lösungsmittel, mindestens einem Salz und mindestens einem Additiv.

Insbesondere enthält die zweite Zusammensetzung und/oder dritte Zusammensetzung zu mindestens 10 Gew.-% Additive, die in der ersten Zusammensetzung nicht vorhanden sind.

Insbesondere enthält die dritte Zusammensetzung Additive, die in der ersten Zusammensetzung und der zweiten Zusammensetzung nicht vorhanden sind.

Insbesondere besteht das Anodenaktivmaterial aus einem Li-Ionen insertierendem Material oder aus einem Lithium-Legierungen ausbildenden Material oder Mischungen aus diesen.

Insbesondere enthält die Anode Graphit.

Insbesondere enthält die Anode Silizium.

Insbesondere enthält die Anode mindestens 30-Gew.% Silizium.

Insbesondere weist das Kathodenaktivmaterial entweder eine Olivin-, eine Spinell- oder eine Schichtoxidstruktur auf.

Insbesondere ist das Kathodenmaterial mit Olivinstruktur Lithiumeisenphosphat oder Lithiumcobaltphosphat.

Insbesondere ist das Kathodenmaterial mit Spinellstruktur Lithiummanganoxid oder Lithiumnickelmanganoxid.

Insbesondere ist das Kathodenmaterial mit Schichtoxidstruktur ein Lithiummetalloxid.

Das Metall kann ein oder mehrere der folgenden Elemente sein: Ni, Co, Mn, Mg, Al, Fe, Zr, Mo, Nb, Cr, Ta, Sn, Zn, V, Ti.

Insbesondere ist in der ersten Zusammensetzung bereits mindestens eines der folgenden Additive enthalten: Vinylencarbonat (VC), Vinlyethylencarbonat (VEC), Fluorethylencarbonat (FEC), Methylethylencarbonat (MEC), Methylphenylcarbonat (MPC), Lithiumbisoxalatoborat (LiBOB), Lithiumdifluoro(oxalato)borat (LiDFOB), Lithiumtetrafluoroborat (LiBF₄), Lithiumtetrafluoro(oxalato)phosphat (LiTFOP), Lithiumdifluorobis(oxalato)phosphat (LiDFBOP), Lithiumnitrat (LiNO₃), Lithiumbisfluorosulfonylimid (LiFSI), Ethylensulfit (ES), Difluormethylacrylat (DFMA), 1,3,2-Dioxathiolan 2,2-Dioxid (DTD), 1,3-Propansulton (PS), Methylen Methanedisulfonat (MMDS), Prop-1-en-1,3-sulton (PES), Litiumdifluorophosphat (LFO).

Insbesondere ist in der zweiten Zusammensetzung bereits mindestens eines der folgenden Additive enthalten: Lithiumbisoxalatoborat (LiBOB), Lithiumdifluoro(oxalato)borat (LiDFOB), Lithiumtetrafluoroborat (LiBF₄), Lithiumtetrafluoro(oxalato)phosphat (LiTFOP), Lithiumdifluorobis(oxalato)phosphat (LiDFBOP), Lithiumnitrat (LiNO₃), Lithiumbisfluorosulfonylimid (LiFSI), Ethylensulfit (ES), Difluormethylacrylat (DFMA), 1,3,2-Dioxathiolan 2,2-Dioxid (DTD), 1,3-Propansulton (PS), Methylen Methanedisulfonat (MMDS), Prop-1-en-1,3-sulton (PES), Tris(trimethylsilyl)phosphit (TMSPi), Tris(trimethylsilyl)phosphat (TMSP), Litiumdifluorophosphat (LFO), Lithium 4,5-dicyano-2-(trifluoromethyl)imidazol-1-id (LiTDI), Pentafluoro(phenoxy)cyclotriphosphazen (FPPN), Tris(2,2,2-Trifluoroethyl)phosphat (TFP), Bis(2,2,2-trifluoroethyl)methylphosphonat (TFMP), Fluorbenzol (FB), Cyclohexylbenzol (CHB), Acetonitril (ACN), Succinonitril, Adiponitril, Difluoroethylcarbonat (DiFEC), Bis(2,2,2,-trifluoroethyl)carbonat (TFEC), 2,2,3,4,4,4-Hexafluorobutyl-methyl-carbonat (HFBMC), 3-(1,1,2,2-Tetrafluoroethoxy)-1,1,2,2-tetrafluoropropan (F-EPE), Methyl(2,2,2-trifluoroethyl)carbonat (F-EMC).

Insbesondere ist in der dritten Zusammensetzung mindestens ein ringförmiges, phosphazenhaltiges Additiv enthalten.

Insbesondere ist in der dritten Zusammensetzung mindestens eines der folgenden Additive enthalten: Lithiumbisoxalatoborat (LiBOB), Lithiumdifluoro(oxalato)borat Lithiumbisoxalatoborat (LiBOB), Lithiumdifluoro(oxalato)borat (LiDFOB), Lithiumtetrafluoroborat (LiBF₄), Lithiumtetrafluoro(oxalato)phosphat (LiTFOP), Lithiumdifluorobis(oxalato)phosphat (LiDFBOP), Lithiumnitrat (LiNO₃), Lithiumbisfluorosulfonylimid (LiFSI), Ethylensulfit (ES), Difluormethylacrylat (DFMA), 1,3,2-Dioxathiolan 2,2-Dioxid (DTD), 1,3-Propansulton (PS), Methylen Methanedisulfonat (MMDS), Prop-1-en-1,3-sulton (PES), Tris(trimethylsilyl)phosphit (TMSPi), Tris(trimethylsilyl)phosphat (TMSP), Litiumdifluorophosphat (LFO), Lithium 4,5-dicyano-2-(trifluoromethyl)imidazol-1-id (LiTDI), Pentafluoro(phenoxy)cyclotriphosphazen (FPPN), Tris(2,2,2-Trifluoroethyl)phosphat (TFP), Bis(2,2,2-trifluoroethyl)methylphosphonat (TFMP), Fluorbenzol (FB), Cyclohexylbenzol (CHB), Acetonitril (ACN), Succinonitril, Adiponitril, Difluoroethylcarbonat (DiFEC), Bis(2,2,2,-trifluoroethyl)carbonat (TFEC), 2,2,3,4,4,4-Hexafluorobutyl-methyl-carbonat (HFBMC), 3-(1,1,2,2-Tetrafluoroethoxy)-1,1,2,2-tetrafluoropropan (F-EPE), Methyl(2,2,2-trifluoroethyl)carbonat (F-EMC).

Insbesondere ist die Batteriezelle eine wiederaufladbare Lithium-Ionen-Batteriezelle.

Insbesondere ist zu beachten, dass jeder Befüllschritt Zeit und Kosten verursacht. Ein zweistufiger Befüllschritt, also z. B. zumindest gemäß der Schritte a) bis d) bzw. a) bis e), kann das Problem der Zersetzung der Additive der zweiten Art oder der im Zusammenhang mit der dritten Zusammensetzung erwähnten Additive effektiv reduzieren. Ein potentiell dritter Befüllschritt, z. B. gemäß Schritt f) verursacht insbesondere erneute Kosten, befähigt jedoch die Verwendung von bis dato nicht nutzbaren Elektrolytkomponenten bzw. Addtiven. Das Kosten/ Nutzenpotential ist daher stets zu berücksichtigen.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/ oder Reihenfolge dieser Gegenstände, Größen oder Prozesse zueinander zwingend vorgeben. Sollte eine Abhängigkeit und/ oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: ein erstes Diagramm;
- Fig. 2:: ein zweites Diagramm;
- Fig. 3:: ein drittes Diagramm;
- Fig. 4:: ein viertes Diagramm; und
- Fig. 5:: eine Ausführungsvariante einer Batteriezelle.

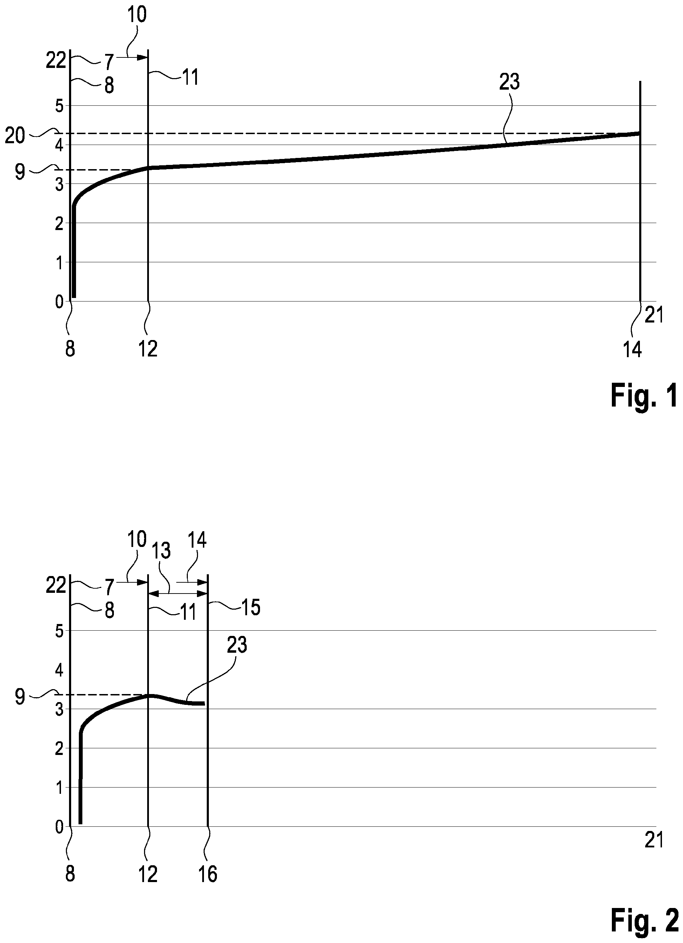

Die Fig. 1 zeigt ein erstes Diagramm. Auf der vertikalen Achse ist die Spannung 22 in der Batteriezelle 1 aufgetragen. Auf der horizontalen Achse ist die Zeit 21 aufgetragen. Der Verlauf 23 verdeutlicht schematisch die Veränderung der Spannung 22 beim Laden.

Gemäß Schritt a) des Verfahrens erfolgt das Bereitstellen des Gehäuses 2 und darin angeordnet die Anode 3, die Kathode 4 sowie der Separator 5. Der Spannungswert der Spannung 22 zum Zeitpunkt null beträgt ca. 0 V. Gemäß Schritt b) erfolgt das Befüllen mit der ersten Zusammensetzung 7, also das Kontaktieren der Anode 3, der Kathode 4 und des Separators 5 mit der ersten Zusammensetzung 7 des Elektrolyten 6, so dass zum Zeitpunkt null ein erster Zustand 8 der Batteriezelle 1 hergestellt ist. Gemäß Schritt c) erfolgt ein elektrisches Aufladen der in dem ersten Zustand 8 vorliegenden Batteriezelle 1 auf einen ersten Spannungswert 9, hier ca. 3,7 Volt, zwischen der Anode 3 und der Kathode 4, so dass ein zweiter Zustand 10 der Batteriezelle 1 hergestellt ist. Gemäß Schritt d) erfolgt ein Ergänzen der ersten Zusammensetzung 7 des Elektrolyten 6 mit einer, gegenüber der ersten Zusammensetzung 7 unterschiedlichen zweiten Zusammensetzung 11 des Elektrolyten 6 in dem Gehäuse 2, so dass ein dritter Zustand 12 der Batteriezelle 1 hergestellt ist. Nach Schritt d) erfolgt im Rahmen eines Schrittes e) ein weiteres elektrisches Aufladen der Batteriezelle 1 auf einen höheren zweiten Spannungswert 20, hier ca. 4,2 Volt, so dass ein vierter Zustand 14 der Batteriezelle 1 hergestellt ist.

Fig. 2 zeigt ein zweites Diagramm. Auf die Ausführungen zu Fig. 1 wird verwiesen.

Im Unterschied zu Fig. 1 erfolgt nach Schritt d) im Rahmen eines Schrittes e) eine Lagerung der Batteriezelle 1 für ein Zeitintervall 13, so dass ein vierter Zustand 14 der Batteriezelle 1 hergestellt ist. Nach Schritt e) erfolgt im Rahmen eines Schrittes f) ein Ergänzen der ersten und zweiten Zusammensetzung 7, 11 des Elektrolyten 6 mit einer, gegenüber der ersten und zweiten Zusammensetzung unterschiedlichen dritten Zusammensetzung 15 des Elektrolyten 6, so dass ein fünfter Zustand 16 der Batteriezelle 1 hergestellt ist.

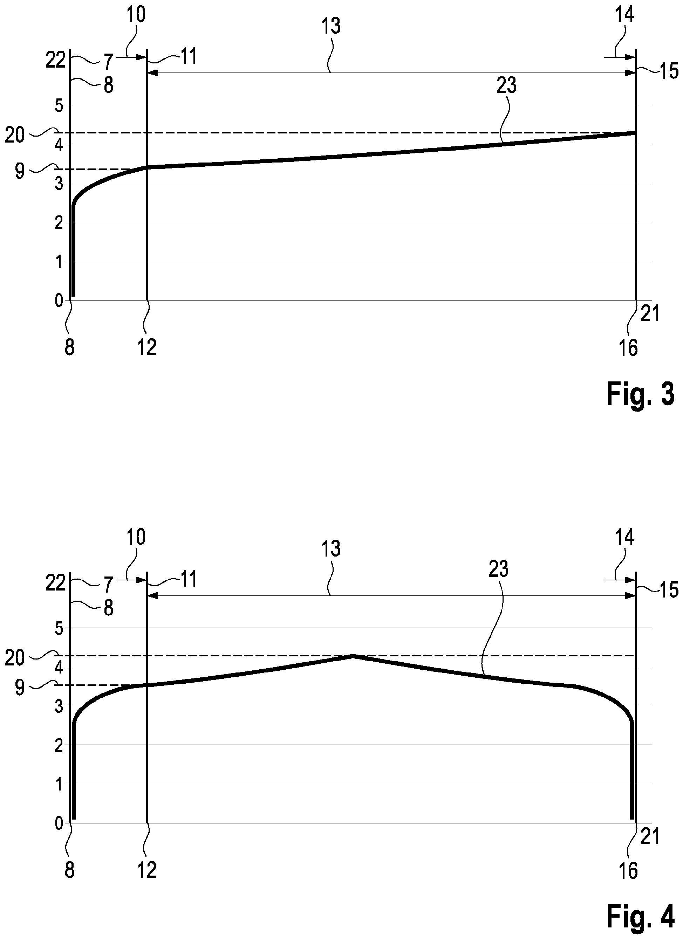

Fig. 3 zeigt ein drittes Diagramm. Auf die Ausführungen zu Fig. 2 wird verwiesen.

Hier erfolgt nach Schritt d) im Rahmen eines Schrittes e) ein weiteres elektrisches Aufladen der Batteriezelle 1 auf einen höheren zweiten Spannungswert 20, hier ca. 4,2 Volt sowie parallel eine Lagerung der Batteriezelle 1 für ein Zeitintervall 13, so dass ein vierter Zustand 14 der Batteriezelle 1 hergestellt ist. Nach Schritt e) erfolgt im Rahmen eines Schrittes f) ein Ergänzen der ersten und zweiten Zusammensetzung 7, 11 des Elektrolyten 6 mit einer, gegenüber der ersten und zweiten Zusammensetzung unterschiedlichen dritten Zusammensetzung 15 des Elektrolyten 6, so dass ein fünfter Zustand 16 der Batteriezelle 1 hergestellt ist.

Fig. 4 zeigt ein viertes Diagramm. Auf die Ausführungen zu Fig. 3 wird verwiesen.

Im Unterschied zu Fig. 3 erfolgt gemäß Schritt e) und nach der Aufladung auf den zweiten Spannungswert 20 ein Entladen der Batteriezelle 1. Bei Erreichen des vierten Zustands 14 liegt ein Spannungswert unterhalb der oberen Abschaltspannung vor. Erst dann erfolgt im Rahmen eines Schrittes f) ein Ergänzen der ersten und zweiten Zusammensetzung 7, 11 des Elektrolyten 6 mit einer, gegenüber der ersten und zweiten Zusammensetzung unterschiedlichen dritten Zusammensetzung 15 des Elektrolyten 6, so dass ein fünfter Zustand 16 der Batteriezelle 1 hergestellt ist.

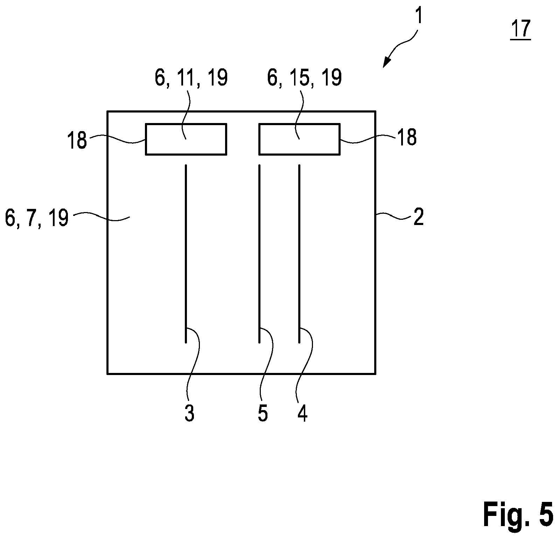

Fig. 5 zeigt eine Ausführungsvariante einer Batteriezelle 1, umfassend ein Gehäuse 2 und darin angeordnet eine Anode 3, eine Kathode 4, dazwischen angeordnet einen Separator 5 sowie einen, die Anode 3, die Kathode 4 und den Separator 5 zumindest teilweise umgebenden, insbesondere flüssigen, Elektrolyten 6 der ersten Zusammensetzung 7.

Es sind zwei weitere Zusammensetzungen 11, 15 des Elektrolyten 6 zeitgleich in dem Gehäuse 2 angeordnet, wobei die zweite Zusammensetzung 11 und die dritte Zusammensetzung 15 in jeweils einem Behälter 18 und damit räumlich getrennt von der Anode 3, der Kathode 4, dem Separator 5 und der ersten Zusammensetzung 7 sowie der jeweiligen anderen Zusammensetzung 15, 11 in dem Gehäuse 2 angeordnet sind. Der Behälter 18 kann nach einem Zeitintervall 13 zur Durchmischung der Zusammensetzungen 7, 11, 15 in dem Gehäuse 2 geöffnet werden. Die Befüllung mit der zweiten Zusammensetzung 11 und mit der dritten Zusammensetzung 15 erfolgt mittels einer Elektrolytbag, also einem geschlossenen Behälter 18, in dem die jeweilige Zusammensetzung 11, 15 angeordnet ist.

Während der Herstellung der Batteriezelle 1 kann die erste Zusammensetzung 7 konventionell über mindestens eine Lanze in das Gehäuse 2 eingeführt werden. Zusätzlich werden vor Verschluss des Gehäuses 2 der Batteriezelle 1 gegenüber der Umgebung 17 die zwei Behälter 18 in eine Gastasche der Batteriezelle 1 miteingebaut. Die Behälter 18 können zu einem späteren Zeitpunkt gemeinsam oder zeitlich versetzt zueinander zu unterschiedlichen Zeitpunkten zur Herstellung der gewünschten Zusammensetzung der gebrauchsfertigen Batteriezelle 1 geöffnet werden.

Das Gehäuse 2 wird nach Anordnung der Zusammensetzungen 7, 11, 15 bzw. der Behälter 18 in dem Gehäuse 2 verschlossen.

Die Behälter 18 werden durch das verschlossene Gehäuse 2, also berührungslos, geöffnet.

Die Freisetzung der zweiten und dritten Zusammensetzung 11, 15 und der darin enthaltenen Additive 19 kann durch eine gerichtete Öffnung des betreffenden Behälters 18 erfolgen. Die gerichtete Öffnung kann bspw. durch Einwirkung von Druck und oder Temperatur stattfinden.

### Bezugszeichenliste

- 1: Batteriezelle
- 2: Gehäuse
- 3: Anode
- 4: Kathode
- 5: Separator
- 6: Elektrolyt
- 7: erste Zusammensetzung
- 8: erster Zustand
- 9: erster Spannungswert
- 10: zweiter Zustand
- 11: zweite Zusammensetzung
- 12: dritter Zustand
- 13: Zeitintervall
- 14: vierter Zustand
- 15: dritte Zusammensetzung
- 16: fünfter Zustand
- 17: Umgebung
- 18: Behälter
- 19: Additiv
- 20: zweiter Spannungswert
- 21: Zeit
- 22: Spannung
- 23: Verlauf

## Patentansprüche

1. Verfahren zur Formierung einer Batteriezelle (1), wobei die Batteriezelle (1) ein Gehäuse (2) und darin angeordnet zumindest eine Anode (3), eine Kathode (4), dazwischen angeordnet einen Separator (5) sowie einen, die Anode (3), die Kathode (4) und den Separator (5) zumindest teilweise umgebenden Elektrolyten (6) aufweist; wobei das Verfahren zumindest die folgenden Schritte aufweist:
a) Bereitstellen des Gehäuses (2) und darin angeordnet die Anode (3), die Kathode (4) sowie den Separator (5);
b) Kontaktieren der Anode (3), der Kathode (4) und des Separators (5) mit einer ersten Zusammensetzung (7) des Elektrolyten (6), so dass ein erster Zustand (8) der Batteriezelle (1) hergestellt ist;
c) elektrisches Aufladen der in dem ersten Zustand (8) vorliegenden Batteriezelle (1) auf einen ersten Spannungswert (9) zwischen der Anode (3) und der Kathode (4), so dass ein zweiter Zustand (10) der Batteriezelle (1) hergestellt ist;
d) Ergänzen der ersten Zusammensetzung (7) des Elektrolyten (6) mit einer, gegenüber der ersten Zusammensetzung (7) unterschiedlichen zweiten Zusammensetzung (11) des Elektrolyten (6) in dem Gehäuse (2), so dass ein dritter Zustand (12) der Batteriezelle (1) hergestellt ist.

2. Verfahren nach Patentanspruch 1, wobei nach Schritt d) im Rahmen eines Schrittes e) zumindest ein weiteres elektrisches Aufladen der Batteriezelle (1) oder eine Lagerung der Batteriezelle (1) für ein Zeitintervall (13) erfolgt, so dass ein vierter Zustand (14) der Batteriezelle hergestellt ist.

3. Verfahren nach Patentanspruch 2, wobei nach Schritt e) im Rahmen eines Schrittes f) ein Ergänzen der ersten Zusammensetzung (7) und der zweiten Zusammensetzung (11) des Elektrolyten (6) mit einer, gegenüber der ersten Zusammensetzung (7) und der zweiten Zusammensetzung (11) unterschiedlichen dritten Zusammensetzung (15) des Elektrolyten (6), so dass ein fünfter Zustand (16) der Batteriezelle (1) hergestellt ist.

4. Verfahren nach einem der vorhergehenden Patentansprüche, wobei das Gehäuse (2) zumindest während des Schrittes d) oder f) hin zu einer Umgebung (17) offen ist, wobei vor einem gebrauchsfertigen Verschließen des Gehäuses (2) ein Überschuss des Elektrolyten (6) aus dem Gehäuse (2) entfernt wird.

5. Verfahren nach einem der vorhergehenden Patentansprüche 1 bis 3, wobei zumindest zwei Zusammensetzungen (7, 11, 15) des Elektrolyten (6) zeitgleich in dem Gehäuse (2) angeordnet werden, wobei dabei zumindest eine der Zusammensetzungen (11, 15) in einem Behälter (18) und damit räumlich getrennt von der Anode (3), der Kathode (4), dem Separator (5) und der mindestens einen anderen Zusammensetzung (7, 11) in dem Gehäuse (2) angeordnet wird; wobei der Behälter (18) nach einem Zeitintervall (13) geöffnet wird zur Durchmischung der Zusammensetzungen (7, 11, 15) in dem Gehäuse (2).

6. Verfahren nach Patentanspruch 5, wobei das Gehäuse (2) unmittelbar nach Anordnung der Zusammensetzungen (7, 11, 15) in dem Gehäuse (2) verschlossen wird.

7. Verfahren nach einem der vorhergehenden Patentansprüche 5 und 6, wobei der Behälter (18) berührungslos geöffnet wird.

8. Verfahren nach einem der vorhergehenden Patentansprüche, wobei die erste Zusammensetzung (7) frei von mindestens einem Additiv (19) ist, dass zumindest in der zweiten Zusammensetzung (11) enthalten ist.

9. Verfahren nach einem der vorhergehenden Patentansprüche, wobei der erste Spannungswert (9) zumindest 50 % eines zweiten Spannungswerts (20) einer gebrauchsfertigen, formierten Batteriezelle (1) beträgt.

10. Verfahren nach einem der vorhergehenden Patentansprüche, wobei die Batteriezelle (1) eine wiederaufladbare Lithium-Ionen-Batteriezelle ist.
